(19) Europäisches Patentamt
European Patent Office
Office européen des brevets

(11) **EP 2 507 902 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(21) Anmeldenummer: **10792860.8**

(22) Anmeldetag: **22.11.2010**

(51) Int Cl.:
***H02M 3/335*** *(2006.01)*

(86) Internationale Anmeldenummer:
**PCT/EP2010/067875**

(87) Internationale Veröffentlichungsnummer:
**WO 2011/067127 (09.06.2011 Gazette 2011/23)**

(54) **SPERRWANDLER MIT LEISTUNGSFAKTORKORREKTUR**

FLYBACK CONVERTER WITH POWER FACTOR CORRECTION

CONVERTISSEUR DU TYPE "FLYBACK" AVEC CORRECTION DE FACTEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2009 AT 19062009**

(43) Veröffentlichungstag der Anmeldung:
**10.10.2012 Patentblatt 2012/41**

(73) Patentinhaber: **Siemens Aktiengesellschaft
80333 München (DE)**

(72) Erfinder: **AUGESKY, Christian
A-1100 Wien (AT)**

(74) Vertreter: **Maier, Daniel Oliver et al
Siemens AG
Postfach 22 16 34
80506 München (DE)**

(56) Entgegenhaltungen:
JP-A- 4 244 781    JP-A- 4 265 666
US-A- 4 280 174    US-A- 4 736 284
US-A- 5 224 025    US-A- 5 757 626

**Beschreibung**

Die Erfindung betrifft einen Sperrwandler mit einer Ladephase und einer Sperrphase zur Umwandlung einer eingangsseitigen Wechselspannung in eine ausgangsseitige Gleichspannung, wobei der Sperrwandler einen Transformator mit wenigstens zwei in Serie angeordneten Primärwicklungen umfasst und getaktet arbeitet. Zudem betrifft die Erfindung ein Verfahren zum Betreiben eines solchen Wandlers.

In üblichen Netzstromversorgungen zur Anwendung kommende Wandler weisen in der Regel stark oberwellenbehaftete Eingangsströme bwz. einen Leistungsfaktor deutlich unter Eins auf. Der Grund dafür liegt in dem Erfordernis, eine gleichstromseitige Speicherkapazität über einen wechselseitigen Gleichrichter nachzuladen. Kurze, nadelförmige Stromspitzen sind das Resultat. Die Höhe dieser Stromspitzen wird ohne zusätzliche Maßnahmen nur durch die Innenwiderstände eines eingangsseitigen Netzes, eines Netzfilters, eines Gleichrichters und einer Speicherkapazität begrenzt.

Um einen Anteil störender Oberschwingungen bei der Stromentnahme eines Wandlers zu reduzieren, ist nach dem Stand der Technik eine sogenannte Leistungsfaktorkorrektur (Power Factor Correction, PFC) vorgesehen.

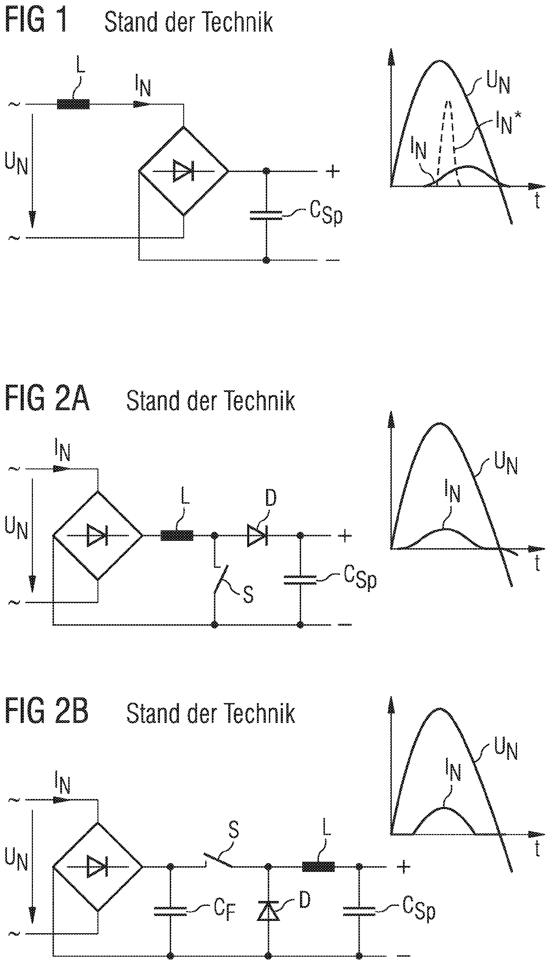

Eine passive Leistungsfaktorkorrektur wird mittels einer hohen Eingangsinduktivität erreicht (Fig. 1). Der große Induktivitätswert ist notwendig, um den Stromflusswinkel während einer Nachladephase deutlich zu erhöhen. Sinnvoll ist dies nur bei kleinen Leistungen, weil sonst die entsprechenden Drosseln zu groß und schwer sind. Neben den Kosten für die Drosseln ist deren Verlustleistung zu berücksichtigen.

Für weite Eingangsspannungsbereiche eignet sich diese Methode wegen der damit verbundenen Varianz des maximalen Eingangsstromes wenig.

Alternativ dazu ist eine aktive Leistungsfaktorkorrektur bekannt, bei der eine eigene Wandlerstufe den aufgenommenen Strom dem zeitlichen Verlauf einer sinusförmig verlaufenden Netzspannung nachsteuert. Solche aktiven PFC-Schaltungen sind in der Regel als Aufwärtswandler ausgebildet und einem Gleichrichter direkt nachgeschaltet (Fig. 2a). Sie laden einen großen Kondensator auf eine Spannung oberhalb der Scheitelspannung der Eingangswechselspannung auf. Der Aufwärtswandler arbeitet auf einer wesentlich höheren Frequenz als eine Netzversorgung, wodurch eine deutlich kleinere Induktivität benötigt wird. Es entsteht ein annähernd kontinuierlicher Stromfluss mit geringer Stromwelligkeit, wobei der mittlere Strom durch eine Steuerschaltung dem Momentanwert der Netzspannung angepasst wird.

Gegenüber einer passiven Leistungsfaktorkorrektur ist eine aktive PFC-Schaltung zwar aufwändiger, allerdings sind höhere Wirkungsgrade und eine bessere Oberwellenunterdrückung möglich. Nachteilig neben dem Aufwand ist die Prinzip bedingt über der maximalen Netzspannung liegende Ausgangspannung einer solchen PFC-Schaltung, wodurch vor allem bei hohen Netzeingangsspannungen in Bezug auf Komponentenbelastungen und Isolationsspannungen Probleme auftreten können.

Anstelle eines Aufwärtswandlers kann eine aktive PFC-Schaltung einen Abwärtswandler umfassen, an dem eine Ausgangsspannung kleiner der Netzspannung anliegt (Fig. 2b). Dadurch sinkt allerdings der mögliche Stromflusswinkel. Der Energieeintrag in einen Speicherkondensator kann nur bei einer Netzspannung größer der Spannung am Speicherkondensator erfolgen. Zudem ist die Stromwelligkeit höher als bei einer Lösung mit einem Aufwärtswandler und die Ansteuerung eines masseseitigen Leistungsschalters ist bei einem Aufwärtswandler einfacher.

Ein Wandler zur Umwandlung einer eingangsseitigen Wechselspannung in eine ausgangsseitige Gleichspannung ist aus der US 5 224 025 bekannt, wobei ein Transformator während eines Arbeitstakts über eine Primärwicklung mittels zweier primärseitig angeordneter Schalter und eines Kondensators aufgeladen wird.

Aus der JP 2002 315 327 A kennt man einen Sperrwandler mit einem Transformator, welcher zwei primärseitige Wicklungen umfasst. Diese Wandlerausführung hat ebenfalls eine Leistungsfaktorkorrektur zum Ziel. Ein Verbindungspunkt zwischen den primärseitigen Wicklungen ist über einen Glättungskondensator mit einem Bezugspotenzial verbunden. Die erste Primärwicklung liegt dabei in Reihe mit dem Glättungskondensator an einer gleichgerichteten Eingangswechselspannung an. Die zweite Primärwicklung liegt in Reihe mit einem Schalter an dem Glättungskondensator an. Bei eingeschaltetem Schalter wird zunächst Energie aus dem Glättungskondensator über die zweite Primärwicklung in den Transformator geladen, wobei sich auch in der ersten Primärwicklung eine Spannung aufbaut. Nach Abschalten des Schalters wird zunächst Energie vom Eingang über die erste Primärwicklung im Glättungskondensator gespeichert und danach die noch im Transformator gespeicherte Energie sekundärseitig abgegeben. Eine Regelung des Eingangsstromes erfolgt dabei über die Transformatorsättigung. Neben einem schmalen Eingangsspannungsbereich weist ein derartiger Wandler aufgrund der Umladungsvorgänge unerwünschte Verluste auf.

Die US 4 280 174 A zeigt einen DC-DC-Wandler mit zwei in Serie angeordneten primärseitigen Wicklungen, wobei an einen Verbindungspunkt der beiden primärseitigen Wicklungen ein Kondensator angeschlossen ist, um die Stabilität der Schaltung zu erhöhen. Mittels zweier Schalter werden die primärseitigen Wicklungen synchron getaktet an eine eingangsseitige Gleichspannung geschaltet. Entsprechende Schaltungen ist auch aus der JP 4 244781 A und der JP 4 265666 A bekannt.

Der Erfindung liegt die Aufgabe zugrunde, für einen Wandler der eingangs genannten Art eine Verbesserung gegenüber dem Stand der Technik anzugeben.

Erfindungsgemäß wird diese Aufgabe gelöst durch einen Wandler gemäß Anspruch 1 und ein Verfahren zum Betreiben des Wandlers gemäß Anspruch 10. Weiterbildungen der Erfindung sind durch die Unteransprüche gekennzeichnet.

Erfindungsgemäß erfolgt eine Leistungsfaktorkorrektur, indem in der Ladephase eines Arbeitstakts während einer Einschaltdauer eines ersten Schalters eine Speicherkondensatoreinheit in Reihe mit einer ersten Primärwicklung mittels des ersten eingeschalteten Schalters über Gleichrichtungselemente an die Wechselspannung geschaltet ist. Zudem ist in der Ladephase eines Arbeitstakts während einer Einschaltdauer eines zweiten Schalters eine zweite Primärwicklung mittels des zweiten eingeschalteten Schalters an die Speicherkondensatoreinheit parallelgeschaltet. Auf diese Weise ist ein Wandler angegeben, mittels dem besonders verlustarm Energie vom Eingang zum Ausgang mit einer steuerbaren Leistungsfaktorkorrektur übertragen wird. Das Funktionsprinzip eines Sperrwandlers wird dabei mit dem eines Abwärtswandlers kombiniert, wobei keine zusätzliche Induktivität vorgesehen ist. Die primärseitige Wicklung ist geteilt ausgeführt und die netzseitige Primärwicklung bildet mit dem ersten Schalter und der Speicherkondensatoreinheit einen Abwärtswandler.

Eine PFC-Funktionalität wird ohne Hinzufügen einer weiteren Wandlerstufe und ohne einer weiteren großen Induktivität erreicht. Die gesamte auf die Sekundärseite übertragene Energie wird nur einmal im Transformator zwischengespeichert, weil das Aufladen der Speicherkondensatoreinheit direkt aus einem eingangsseitig angeschlossenen Netz erfolgt. Dementsprechend weist die gesamte erfindungsgemäße Wandleranordnung eine hohe Effizienz auf.

Ein weiterer Vorteil besteht darin, dass die am ersten Schalter und an der ersten Primärwicklung anliegende Spannung nur der Differenz aus gleichgerichteter Eingangsspannung und der Spannung an der Speicherkondensatoreinheit entspricht. Die Belastung dieser Komponenten wird demnach auch bei hohen Eingangsspannungen niedrig gehalten. Damit kann auch der Aufwand für den Schutz gegen Netztransienten gesenkt werden, insbesondere in Kombination mit einem schaltbaren Freilauf der ersten Primärwicklung.

Durch eine geeignete Anpassung der Spannung der Speicherkondensatoreinheit an die Eingangsspannung wird ein sehr weiter Eingangsspannungsbereich abgedeckt. Die Spannung an der Speicherkondensatoreinheit wird bei kleiner Eingangsspannung niedrig und bei großer Eingangsspannung hoch vorgegeben. Es ist also eine Weitbereichsfähigkeit ohne Umschaltung gegeben, das heißt ohne Notwendigkeit einen Spannungsverdoppler vorzusehen.

Zudem ist der erfindungsgemäße Wandler grundsätzlich für quasiresonanten Schaltbetrieb mit diskreten Entlastungs- bzw. Resonanzkapazitäten geeignet. Durch einen solchen Schaltbetrieb wird einerseits die Effizienz weiter gesteigert und andererseits das Auftreten von Hochfrequenzstörungen deutlich reduziert.

Entsprechend dem erfindungsgemäßen Verfahren wird in der Ladephase eines Arbeitstakts während einer Einschaltdauer des ersten Schalters eingangsseitig zugeführte Energie mittels des eingeschalteten ersten Schalters über die erste Primärwicklung im Transformator und in der Speicherkondensatoreinheit gespeichert und in der Ladephase während einer Einschaltdauer des zweiten Schalters elektrische Energie aus der Speicherkondensatoreinheit mittels des eingeschalteten zweiten Schalters über die zweite Primärwicklung im Transformator gespeichert. Die während einer Leitphase des ersten Schalters über die erste Primärwicklung in den Transformator eingebrachte Energie wird nicht in die Speicherkondensatoreinheit umgeladen sondern sekundärseitig abgegeben. Während einer Leitphase des ersten Schalters lädt der durch die erste Primärwicklung fließende Strom zudem die Speicherkondensatoreinheit auf. Die so gespeicherte Energie wird über die zweite Primärwicklung bei eingeschaltetem zweitem Schalter in den Transformator geladen und sekundärseitige abgegeben. Es erfolgt also keine verlustbehaftete Rückspeicherung aus dem Transformator in die Speicherkondensatoreinheit. Die im Transformator gespeicherte Energie wird direkt an die Sekundärseite des Wandlers abgegeben.

Eine vorteilhafte Weiterbildung des Wandlers sieht vor, dass eine Filterkondensatoreinheit angeordnet ist, welche an einen Leiter der Wechselspannung angeschlossen ist und der Gleichrichtungselemente nachgeordnet sind. Diese Filterkondensatoreinheit dient dabei der Glättung und ist kleiner als übliche Puffereingangskondensatoren ausgelegt.

Für die sekundärseitige Ausgestaltung des Wandlers ist es von Vorteil, wenn der Transformator wenigstens eine Sekundärwicklung umfasst, an welche über eine sekundärseitige Gleichrichterschaltung ein Ausgangskondensator angeschlossen ist. Günstigerweise besteht diese sekundärseitige Gleichrichterschaltung aus einer Gleichrichterdiode.

Primärseitig ist in einer vorteilhaften Ausgestaltung vorgesehen, dass der erste Schalter in Reihe mit der Reihenschaltung bestehend aus erster Primärwicklung und Speicherkondensatoreinheit angeordnet ist und dass der zweite Schalter in Reihe mit der zweiten Primärwicklung angeordnet ist. Dieser einfache Aufbau ermöglicht eine einfache Dimensionierung der einzelnen Bauteile und eine kompakte Bauweise.

Zudem erfolgt bei einem einfachen Aufbau die Anordnung der Speicherkondensatoreinheit in der Weise, dass eine Verbindung zwischen den beiden Primärwicklungen an einen Anschluss der Speicherkondensatoreinheit angeschlossen ist und dass deren zweiter Anschluss an ein primärseitiges Bezugspotenzial angeschlossen ist. Dabei ist es günstig, wenn die Reihenschaltung bestehend aus zweiter Primärwicklung und zweitem Schaltelement parallel zu der Speicherkondensatoreinheit angeordnet ist.

Eine andere vorteilhafte Ausgestaltung der Erfindung sieht vor, dass parallel zu der Reihenschaltung bestehend aus erster Primärwicklung und Speicherkondensatoreinheit eine Freilaufdiode angeordnet ist, dass die Speicherkondensatoreinheit über den ersten Schalter, insbesondere in Reihe mit einem ersten Strommesswiderstand, mit einem Bezugspotenzial verbunden ist und dass die zweite Primärwicklung über den zweiten Schalter, insbesondere in Reihe mit dem ersten und einem zweiten Strommesswiderstand, mit demselben Bezugspotenzial verbunden ist. Bei dieser Anordnung kann der erste Schalter während der Leitphase des zweiten Schalters eingeschaltet bleiben, wodurch eine vereinfachte Ansteuerung gegeben ist.

Eine weitere vorteilhafte Ausgestaltung ist derart, dass der erste Schalter ein erstes und ein zweites Schaltelement umfasst, dass die erste Primärwicklung in eine erste und in eine zweite Teilwicklungen aufgeteilt ist, dass die erste Teilwicklung in Serie mit dem ersten Schaltelement und mit einem positiv aufgeladenen Speicherkondensator über ein erstes Gleichrichterelement an die Wechselspannung angeschlossen ist und dass die zweite Teilwicklung in Serie mit dem zweiten Schaltelement und einem negativ aufgeladenen Speicherkondensator über ein zweites Gleichrichterelement an die Wechselspannung angeschlossen ist. Dabei reduzieren sich die Gleichrichtungselemente auf zwei Gleichrichterdioden.

Eine vorteilhafte Weiterbildung sieht vor, dass ein drittes Schaltelement in einem Freilaufpfad der ersten Primärwicklung angeordnet ist, sodass ein schaltbarer Freilauf für diese Primärwicklung gegeben ist.

Beim Betreiben des Wandlers ist vorteilhafterweise vorgesehen, dass während einer Ladephase zu Beginn der erste Schalter eingeschaltet und der zweite Schalter ausgeschaltet wird und anschließend der zweite Schalter eingeschaltet und der erste Schalter ausgeschaltet wird und der zweite Schalter so lange eingeschaltet bleibt, bis ein Strom durch das zweite Schaltelement einen vorgegebenen Schwellenwert erreicht. Die Steuerung der übertragen Energie erfolgt also über den primärseitigen Strom, wobei dessen Schwellenwert durch eine sekundärseitige Spannungsregelung vorgegeben wird.

Dabei ist es des Weiteren von Vorteil, wenn das Verhältnis der Einschaltzeitdauern des ersten und des zweiten Schalters in der Weise geregelt wird, dass die Spannung an der Speicherkondensatoreinheit im Mittel konstant bleibt. Das Gleichgewicht der Speicherkondensatoreinheit wird also unabhängig von der sekundärseitigen Spannungsregelung und der Abschaltsteuerung des primärseitigen Stromes geregelt. Die Stellgröße dieses zweiten langsameren Regelkreises bildet die Einschaltdauer des ersten Schalters.

Die Erfindung wird nachfolgend in beispielhafter Weise unter Bezugnahme auf die beigefügten Figuren erläutert. Es zeigen in schematischer Darstellung:

Fig. 1 Wandlerschaltung nach dem Stand der Technik mit Eingangsinduktivität

Fig. 2a Aktive PFC-Schaltung nach dem Stand der Technik als Aufwärtswandler ausgebildet

Fig. 2b Aktive PFC-Schaltung nach dem Stand der Technik als Abwärtswandler ausgebildet

Fig. 3 Ausführungsbeispiel eines erfindungsgemäßen Wandlers

Fig. 4 Stromdiagramm mit Schaltzuständen der Schalter

Fig. 5 Verlauf des Eingangstromes und der Eingangsspannung

Fig. 6 Ausführungsbeispiel gemäß Fig. 3 mit als MOS-FETs ausgebildete Schalter

Fig. 7 Alternatives Ausführungsbeispiel eines erfindungsgemäßen Wandlers

Fig. 8 Variante eingangsseitiger Gleichrichterelemente

Fig. 9 Alternatives Ausführungsbeispiel eines erfindungsgemäßen Wandlers mit nur zwei eingangsseitigen Gleichrichterdioden

Die Fig. 1-3 zeigen bekannte PFC-Schaltungen, welche eine Eingangswechselspannung in eine Gleichspannung eines Zwischenkreises umwandeln. Bei einer passiven Schaltung (Fig. 1) ist vor einer Gleichrichtereinheit eine ausreichend große Induktivität L angeordnet. Der Stromflusswinkel wird auf diese Weise gegenüber dem ursprünglichen Stromverlauf $I_N^*$ erhöht, wobei es jedoch zu einer zu berücksichtigenden Phasenverschiebung kommt.

Die aktiven Schaltungen (Fig. 2a und 2b) umfassen einen getakteten Schalter S, mittels dem neben dem Stromflusswinkel auch die Phasenlage des Stromes IN beeinflussbar ist.

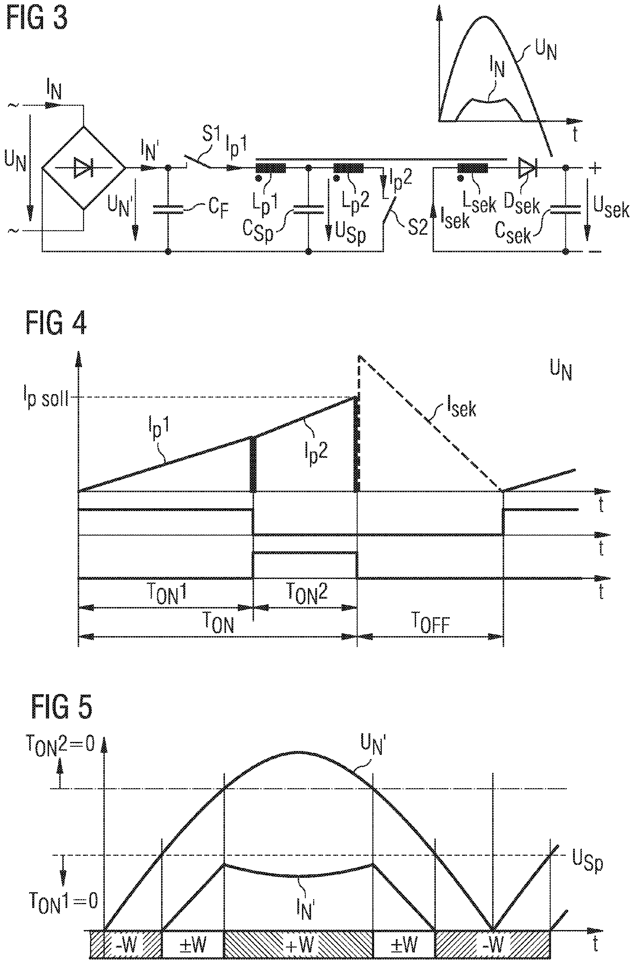

Der in Fig. 3 dargestellte Wandler umfasst eine eingangsseitige Gleichrichterbrücke, die an eine Wechselspannung $U_N$ angeschlossen ist und einen Wechselstrom IN in einen gleichgerichteten Strom $I_N'$ umwandelt. Der Gleichrichterbrücke nachgeschaltet ist ein Filterkondensator $C_F$, welcher klein in Bezug auf die Frequenz der Wechselspannung $U_N$ dimensioniert ist. Dieser Filterkondensator $C_F$ kann vorteilhafterweise auch vor der Gleichrichterbrücke angeordnet sein, wodurch eine Aufladung infolge eines Energierückflusses aus dem Wandler ausgeschlossen wird.

Der Wandler umfasst weiters einen Transformator mit zwei Primärwicklungen $L_p1$, $L_p2$ und einer Sekundärwicklung $L_{sek}$. Der Anfang der ersten Primärwick-

lung $L_p1$ ist über einen ersten Schalter S1 an den Ausgang der Gleichrichterbrücke angeschlossen. Bei geschlossenem erstem Schalter S1 fließt ein erster Primärstrom $I_p1$ durch die erste Primärwicklung $L_p1$. Das Ende dieser ersten Primärwicklung $L_p1$ ist mit dem Anfang der zweiten Primärwicklung $L_p2$ verbunden, wobei ein Verbindungspunkt zwischen diesen Primärwicklungen $L_p1$, $L_p2$ an einen Anschluss eines Speicherkondensators $C_{sp}$ angeschlossen ist. Der zweite Anschluss dieses Speicherkondensators $C_{sp}$ ist an ein primärseitiges Bezugspotenzial angeschlossen.

Das Ende der zweiten Primärwicklung $L_p2$ ist über einen zweiten Schalter S2 ebenfalls an das Bezugspotenzial angeschlossen, sodass die Reihenschaltung bestehend aus zweiter Primärwicklung $L_p2$ und zweitem Schalter S2 parallel zum Speicherkondensator $C_{Sp}$ geschaltet ist. Bei geschlossenem zweitem Schalter S2 fließt ein zweiter Primärstrom $I_p2$ durch die zweite Primärwicklung $L_p2$.

Über einen Kern des Transformators besteht eine Kopplung zwischen den Primärwicklungen $L_p1$, $L_p2$ und der Sekundärwicklung $L_{sek}$. Die in der Sekundärwicklung $L_{sek}$ induzierte Spannung bewirkt einen sekundärseitigen Strom $I_{sek}$, welcher über eine Gleichrichterdiode $D_{sek}$ einen sekundärseitigen Ausgangskondensator $C_{sek}$ auflädt. An diesem Ausgangskondensator $C_{sek}$ liegt die Ausgangsspannung $U_{sek}$ an.

Der Wandler bewirkt einen Verlauf des eingangsseitigen Stromes $I_N$ in der Weise, dass nur im Bereich der Nulldurchgänge der Wechselspannung $U_N$ kurzzeitig kein Strom $I_N$ fließt. Dazwischen steigt der Strom $I_N$ an, wobei im Bereich der höchsten Spannung $U_N$ eine Reduktion des Stromes $I_N$ erfolgt, sodass der Stromverlauf insgesamt abgeflacht ist. Die Stromentnahme aus einem eingangsseitig angeschlossenen Netz erfolgt also nicht in Form einer netzsynchronen Sinusfunktion, allerdings werden Stromspitzen vermieden und der Stromflusswinkel stark erweitert, sodass Stromoberwellen unterhalb geforderter Grenzwerte bleiben.

Die in Fig. 4 dargestellten Stromverläufe resultieren aus der Regelung des Wandlers. Eine sekundärseitige Spannungsregelung gibt einen Schwellenwert $I_p$ für den primärseitigen Strom $I_p1$ bzw. $I_p2$ vor. Zu Beginn einer Ladephase wird der erste Schalter S1 eingeschaltet. Der erste Primärstrom $I_p1$ durch die erste Primärwicklung $L_p1$ steigt an, bis der erste Schalter S1 nach einer mittels eines zweiten Regelkreises vorgegebenen Einschaltdauer $T_{ON}1$ wieder ausgeschaltet wird. Der zweite Regelkreis bestimmt dabei das Spannungsniveau des Speicherkondensators $C_{Sp}$ und hält dieses im Mittel konstant. Gleichzeitig mit dem Ausschalten des ersten Schalters S1 wird der zweite Schalter S2 eingeschaltet. Dabei ist es von Vorteil, eher eine geringfügige Überlappung als eine zeitliche Lücke zwischen den Einschaltzuständen vorzusehen. Während der Einschaltdauer $T_{ON}2$ des zweiten Schalters S2 fließt der zweite Primärstrom $I_p2$ durch die zweite Primärwicklung $L_p2$ und steigt an, bis der vorgegebenen Schwellenwert $I_{p\,soll}$ erricht ist.

Dann wird die Ladephase durch Abschalten des zweiten Schalters S2 beendet.

In der nachfolgenden Sperrphase, während der beide Schalter S1, S2 für eine Ausschaltdauer $T_{OFF}$ ausgeschaltet bleiben, fließt ein abfallender Sekundärstrom $I_{sek}$ durch die Sekundärwicklung $L_{sek}$ des Transformators und lädt den Ausgangskondensator $C_{sek}$ auf.

Zur Regelung der Einschaltzeit $T_{ON}$ ist es vorteilhaft, wenn eine Mittelung der Eingangsspannung $U_N$ sowie eine Vorgabe des Stromschwellenwerts $I_{p\,soll}$ als Vorsteuerwert der Regelung mittels eines gleitenden Fensters über jeweils einer Halbwelle erfolgt. Es ist somit ein Kammfilter für die Netzfrequenz und Oberwellen vorgesehen.

Die Einschaltzeit $T_{ON}$ wird dabei günstigerweise vom Stromschwellenwert $I_{p\,soll}$ unter Berücksichtungen des über die Ausgangsleistung gegebenen linearen Zusammenhangs abgeleitet. Ein I-Regler wird nur für eine Restabweichung von der Speicherkondensatorspannung $U_{Sp}$ genutzt.

Fig. 5 zeigt den Verlauf der gleichgerichteten Eingangsspannung $U_N'$ und des Stromes $I_N'$ in einem stabilen Lastpunkt. Dargestellt sind die möglichen Zeitspannen, in welchen dem Speicherkondensator $C_{Sp}$ Energie W entweder entnommen oder zugeführt wird. In einem stabilen Lastpunkt ergibt sich bei geeigneter Einstellung der maximalen Einschaltdauer $T_{ON}1$ des ersten Schalters S1 eine ausgeglichene Energiebilanz im Speicherkondensator $C_{Sp}$. In jenen Phasen, in welchen die eingangsseitige Spannung $U_N'$ kleiner als die Spannung $U_{Sp}$ am Speicherkondensator $C_{Sp}$ ist, wird die Energie zur Gänze aus diesem Speicherkondensator $C_{Sp}$ entnommen. Wird die eingangsseitige Spannung $U_N'$ größer als die Kondensatorspannung $U_{Sp}$, erfolgt die Energieaufnahme zunächst sowohl aus einem eingangsseitig angeschlossenen Netz, als auch aus dem Speicherkondensator $C_{Sp}$. Der entsprechende Stromverlauf ist in Fig. 4 dargestellt. Bei weiterem Anstieg der eingangsseitigen Spannung $U_N'$ erfolgt die Energieaufnahme zur Gänze aus dem Netz, wobei der von der sekundärseitigen Spannungsregelung vorgegebene Stromschwellwert $I_{p\,soll}$ bereits innerhalb der Einschaltdauer $T_{ON}1$ des ersten Schalters erreicht wird.

Die Vorgabe für die gewünschte Spannung $U_{Sp}$ am Speicherkondensator $C_{Sp}$ erfolgt nach strategischen Gesichtspunkten. Kriterien sind dabei eine Reduktion der Spannung am ersten Schalter S1, eine Nutzung der gespeicherten Energie zur Netzausfallsüberbrückung, eine Optimierung des Stromflusswinkels, ein gesteuertes Hochfahren beim Einschalten, eine Optimierung der Schaltbedingungen für spannungsloses Schalten etc.

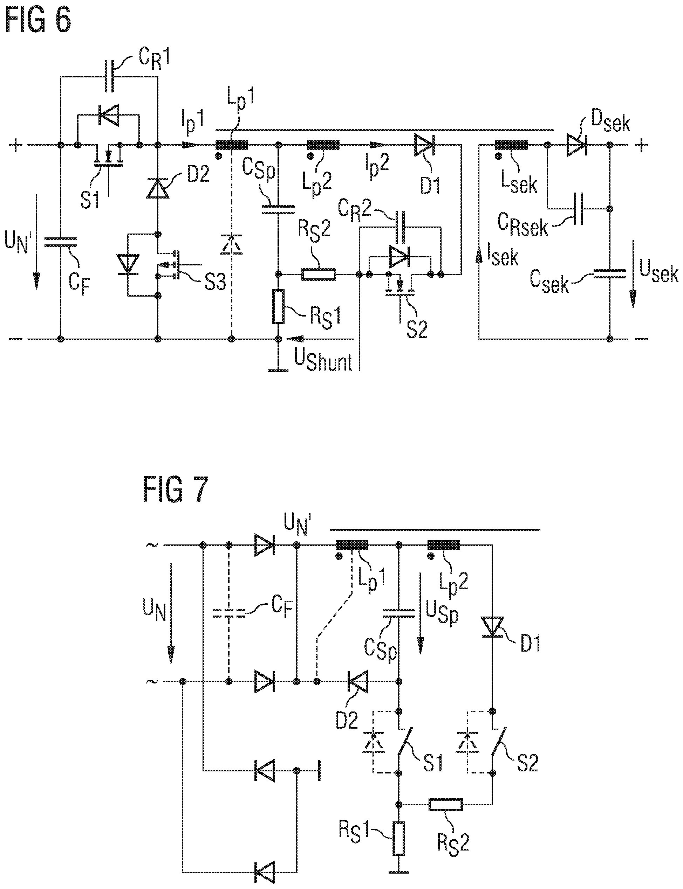

Eine praktische Ausführung eines Wandlers gemäß Fig. 3 ist in Fig. 6 dargestellt. Mit als MOS-FETs ausgebildeten Schaltern S1, S2 muss speziell auf deren technologiebedingte Paralleldioden Rücksicht genommen werden. Insbesondere in Serie zum zweiten Schalter S2 ist dies notwendig, um einen Kurzschluss der zweiten Primärwicklung $L_p2$ beim Hochlaufen zu verhindern.

Beim Hochlaufen ist die Speicherkondensatorspannung $U_{Sp}$ noch nahezu Null oder sehr klein gegenüber der Differenzspannung zwischen eingangsseitige Spannung $U_N'$ und Speicherkondensatorspannung $U_{Sp}$. Es ist daher eine erste Diode D1 angeordnet, deren Kathode mit der Kathode der Paralleldiode im zweiten Schalter S2 verbunden ist.

Zur Beschleunigung des Startverhaltens kann eine Freilaufdiode D2 vorgesehen sein. Vorteilhafterweise ist diese mittels eines dritten Schalters S3 schaltbar realisiert, da sonst die Randbedingungen für die Dimensionierung des Transformators sehr ungünstig werden können. Ohne eine solche Maßnahme müsste die Speicherkondensatorspannung $U_{Sp}$ immer größer sein als die auf die Primärseite rücktransformierte Sekundärspannung $U_{sek}$. Es würde insbesondere der Betrieb mit niedriger Eingangsspannung $U_N$ eingeschränkt sein.

Alternativ zu einer schaltbaren Freilaufdiode D2 kann die erste Primärwicklung $L_p1$ mit einem Freilaufpfad angezapft sein. Eine weitere Möglichkeit besteht darin, einen Freilaufpfad mit einer Hilfswicklung vorzusehen, wobei die Hilfswicklung und die erste Primärwicklung $L_p1$ magnetisch gekoppelt sind.

Um die Regelung des Primärstromes einfach zu gestalten ist eine Anordnung von Strommesswiderständen $R_s1$, $R_s2$, an welchen eine Messspannung $U_{Shunt}$ abfällt, vorgesehen. Dadurch kann mit nur einem Komparator der primärseitige Strom $I_p$, der entweder als erster Primärstrom $I_p1$ durch den Kondensator $C_{Sp}$ und einen ersten Strommesswiderstand $R_s1$ fließt, oder als zweiter Primärstrom $I_p2$ durch den zweiten Schalter S2 und einen zweiten Strommesswiderstand $R_s2$ fließt, ohne gegenseitige Beeinflussung detektiert werden. Mit einer günstigen Dimensionierung der Strommesswiderstände $R_s1$, $R_s2$ ist auch eine unterschiedliche Windungszahl der beiden Primärwicklungen $L_p1$, $L_p2$ ausgleichbar.

Der eingangsseitige Filterkondensator $C_F$ ist in seiner Größe so bemessen, dass während einer Schaltperiode des Wandlers mit einer Dauer von ca. 3-20 µs die Spannung an diesem Kondensator $C_F$ nicht mehr als um einen vorgegebenen Spannungswert (z.B. 10V) abfällt. Somit ist ein kleiner Filterkondensator $C_F$ mit einer Kapazität von wenigen Mikrofarad ausreichend, um für den Wandler eine eingangsseitige Spannung $U_N'$ mit ausreichender Steifigkeit bereitzustellen. Zusammen mit einem auf die Schaltfrequenz optimierten Netzfilter vor dem eingangsseitigen Gleichrichtungselementen werden damit auch die Anforderungen an die Filterung hochfrequenter Netzstörungen erfüllt.

Um quasiresonanten Schaltbetrieb zu ermöglichen sind parallel zum ersten und zweiten Schalter S1, S2 und zur sekundärseitigen Gleichrichterdiode $D_{sek}$ Resonanzkapazitäten $C_R1$, $C_R2$, $C_{Rsek}$ vorgesehen.

Eine alternative Ausführung der Wandlerprimärseite ist in Fig. 7 dargestellt. Eingangsseitig liegt eine Eingangswechselspannung $U_N$ an. Leiter und Nullleiter dieser Wechselspannung sind optional mittels eines eingangsseitigen Filterkondensators $C_F$ verbunden. Dem Filterkondensators $C_F$ nachgeschaltet sind zwei Gleichrichterdioden. Zudem sind Leiter und Nullleiter über zwei weitere Gleichrichterdioden mit einem Bezugspotenzial verbunden.

Bezogen auf das Bezugspotenzial sind an die gleichgerichtete Eingangsspannung $U_N'$ in Reihe die erste Primärwicklung $L_p1$, die zweite Primärwicklung $L_p2$, eine erste Diode D1, der zweite Schalter S2 und Strommesswiderstände $R_s2$, $R_s1$ angeschlossen. Die erste Diode D1 ist aufgrund einer Paralleldiode im zweiten Schalter S2 erforderlich.

An einen Verbindungspunkt zwischen erster und zweiter Primärwicklung $L_p1$, $L_p2$ ist ein erster Anschluss des Speicherkondensators $C_{Sp}$ angeschlossen. Der zweite Anschluss des Speicherkondensators $C_{Sp}$ ist über eine Freilaufdiode D2 an die gleichgerichtete Eingangsspannung zurückgeführt. Alternativ dazu kann dieser Freilaufpfad auch die erste Primärwicklung Lp1 anzapfen.

Der zweite Anschluss des Speicherkondensators $C_{Sp}$ ist weiters über den ersten Schalter und einen ersten Strommesswiderstand $R_s1$ mit dem Bezugspotenzial verbunden. Beide Schalter S1, S2 sind somit masseseitig angeordnet. Der erste Schalter S1 kann dabei auch bei eingeschaltetem zweitem Schalter S2 eingeschaltet bleiben.

Mit einem Wicklungsverhältnis N1 der ersten Primärwicklung $L_p1$ zur Sekundärwicklung $L_{sek}$ und einem Wicklungszahlverhältnis N2 der zweiten Primärwicklung $L_p2$ zur Sekundärwicklung $L_{sek}$ ergibt sich am zweiten Schalter S2 folgende maximale Spannung:

$$U_{S2}max = U_N' + U_{sek} \cdot (N1+N2) \quad bzw.$$

$$U_{S2}max = U_N' + U_{Sp} \cdot (N2/N1 + 1)$$

Zur kontrollierten Aufladung des Speicherkondensators $C_{Sp}$ ist es günstig, wenn der erste Schalter S1 als analoge Stromsenke geschaltet ist. Erst wenn die Spannung am Kondensator $C_{Sp}$ einen minimalen Arbeitspunkt erreicht hat, wird in den Schaltbetrieb übergegangen. Ziel ist dabei ein kontinuierliches Hochfahren der Sekundärspannung $U_{sek}$.

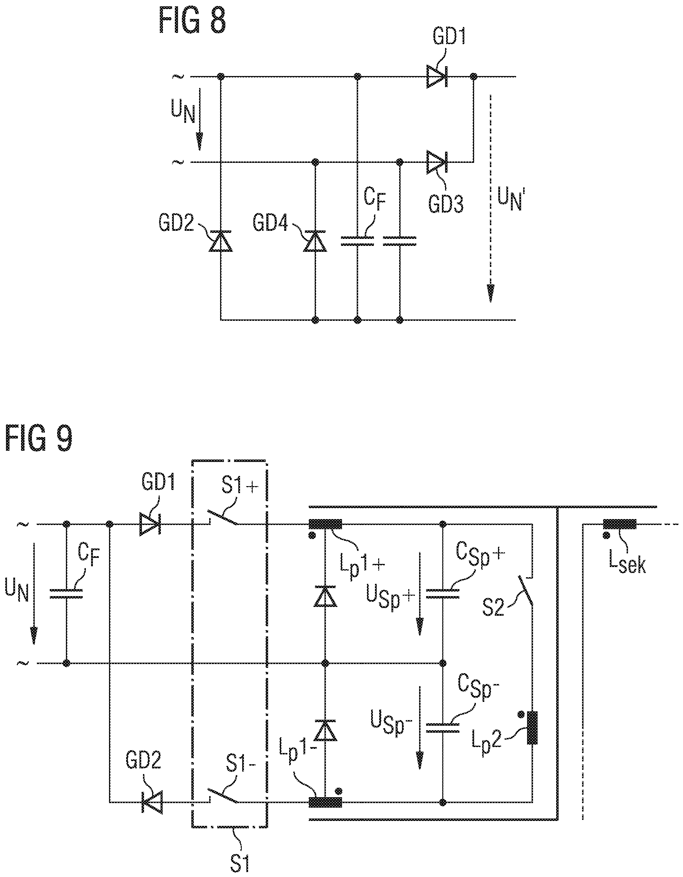

Eine alternative Filterkondensatorschaltung zur Vermeidung von Rückladungen in einen Filterkondensator $C_F$ ist in Fig. 8 dargestellt. Eine solche Schaltung ist für alle Ausführungsformen sinnvoll. Der Leiter einer Eingangswechselspannung ist an die Anode einer ersten Gleichrichterdiode GD1 und an die Kathode einer zweiten Gleichrichterdiode GD2 angeschlossen. Der Nullleiter der Eingangswechselspannung ist an die Anode einer dritten Gleichrichterdiode GD3 und an die Kathode einer vierten Gleichrichterdiode GD4 angeschlossen. Die Kathoden der ersten GD1 und der dritten Gleichrichterdiode GD3 sind miteinander verbunden. An dieser Verbindung liegt die gleichgerichtete Eingangsspannung $U_N'$ an, bezogen auf ein Bezugspotenzial.

Die Anoden der zweiten GD2 und der vierten Gleichrichterdiode GD4 sind mit dem Bezugspotenzial verbunden. Zwischen Bezugspotenzial und Leiter bzw. Bezugspotenzial und Nullleiter ist jeweils ein Filterkondensator $C_F$ angeordnet.

Eine weitere Ausführungsform der Wanderprimärseite mit einer vereinfachten Gleichrichterschaltung ist in Fig. 9 dargestellt. Der Leiter einer eingangsseitigen Wechselspannung $U_N$ ist mit der Anode einer ersten Gleichrichterdiode GD1 und der Kathode einer zweiten Gleichrichterdiode GD2 verbunden. Die erste Primärwicklung $L_p1$ ist aufgeteilt in eine erste Teilwicklung $L_p1+$ und ein eine zweite Teilwicklung $L_p1-$. Zudem umfasst der erste Schalter zwei Schaltelemente S1+, S1-.

Zwischen die Kathode der ersten Gleichrichterdiode GD1 und dem Nullleiter der eingangsseitigen Wechselspannung $U_N$ sind in Reihe das erste Schaltelement S1+, die erste Teilwicklung $L_p1+$ und ein erster Speicherkondensator $C_{Sp}+$ geschaltet. Zwischen die Anode der zweiten Gleichrichterdiode GD2 und dem Nullleiter sind in Reihe das zweite Schaltelement S2+, die zweite Teilwicklung $L_p1-$ und ein zweiter Speicherkondensator $C_{Sp}-$ geschaltet.

An die somit in Serie angeordneten Speicherkondensatoren $C_{Sp}+$, $C_{Sp}-$ ist in Reihe mit dem zweiten Schalter S2 die zweite Primärwicklung $L_p2$ geschaltet. Dabei ist zu beachten, dass die Spannungen $U_{Sp}+$, $U_{Sp}-$ der Kondensatoren $C_{Sp}+$, $C_{Sp}-$ jeweils geregelt werden.

Für die Teilwicklungen $L_p1+$, $L_p1-$ der ersten Primärwicklung $L_p1$ kann jeweils ein Freilaufpfad vorgesehen sein, welcher die jeweilige Teilwicklung $L_p1+$ bzw. $L_p1-$ anzapft.

Alternativ zur in Fig. 9 dargestellten Anordnung kann der erste Schalter S1 auch im Fußpunkt der Speicherkondensatoren $C_{Sp}+$, $C_{Sp}-$ angeordnet sein.

Die dargestellten Wandlerausführungen sind in keiner Weise einschränkend und stellen nur mögliche spezielle Ausführungen eines erfindungsgemäßen Wandlers dar. Zudem sind einzelne Funktionseinheiten (z.B. Gleichrichtungselemente gemäß Fig. 8), die nur mit Bezug auf eine der Ausführungsformen beschrieben sind, entsprechend für andere Ausführungsformen anwendbar.

**Patentansprüche**

1. Sperrwandler mit einer Ladephase und einer Sperrphase zur Umwandlung einer eingangsseitigen Wechselspannung ($U_N$) in eine ausgangsseitige Gleichspannung ($U_{sek}$), wobei der Sperrwandler einen Transformator mit wenigstens zwei in Serie angeordneten Primärwicklungen ($L_{p1}$, $L_{p2}$) umfasst und getaktet arbeitet, **dadurch gekennzeichnet, dass** eine Leistungsfaktorkorrektur erfolgt, indem in der Ladephase eines Arbeitstakts während einer Einschaltdauer ($T_{ON}1$) eines ersten Schalters (S1) eine Speicherkondensatoreinheit ($C_{Sp}$) zum Aufladen in Reihe mit einer ersten Primärwicklung ($L_{p1}$) mittels des ersten eingeschalteten Schalters (S1) über Gleichrichtungselemente (GD1, GD2, GD3, GD4) an die Wechselspannung ($U_N$) geschaltet ist und indem in der Ladephase eines Arbeitstakts während einer Einschaltdauer ($T_{ON}2$) eines zweiten Schalters (S2) zum Entladen der Speicherkondensatoreinheit ($C_{Sp}$) eine zweite Primärwicklung (Lp2) mittels des zweiten eingeschalteten Schalters (S2) an die Speicherkondensatoreinheit ($C_{Sp}$) parallelgeschaltet ist, dass während einer Ladephase zu Beginn für die Einschaltdauer ($T_{ON}1$) des ersten Schalters (S1) der erste Schalter (S1) eingeschaltet und der zweite Schalter (S2) ausgeschaltet ist und anschließend der zweite Schalter eingeschaltet (S2) und der erste Schalter (S1) ausgeschaltet ist und der zweite Schalter (S2) so lange eingeschaltet bleibt, bis ein Strom ($I_p2$) durch den zweiten Schalter (S2) einen vorgegebenen Schwellenwert ($I_{p \, soll}$) erreicht, und dass in der Sperrphase beide Schalter (S1, S2) ausgeschaltet sind.

2. Sperrwandler nach Anspruch 1, **dadurch gekennzeichnet, dass** eine Filterkondensatoreinheit ($C_F$) angeordnet ist, welche an einen Leiter der Wechselspannung ($U_N$) angeschlossen ist und der Gleichrichtungselemente (GD1, GD2, GD3, GD4) nachgeordnet sind.

3. Sperrwandler nach Anspruch 1 oder 2, **dadurch gekennzeichnet, dass** der Transformator wenigstens eine Sekundärwicklung ($L_{sek}$) umfasst, an welche über eine sekundärseitige Gleichrichterschaltung ($D_{sek}$) ein Ausgangskondensator ($C_{sek}$) angeschlossen ist.

4. Sperrwandler nach einem der Ansprüche 1 bis 3, **dadurch gekennzeichnet, dass** der erste Schalter (S1) in Reihe mit der Reihenschaltung bestehend aus erster Primärwicklung (Lp1) und Speicherkondensatoreinheit (CSp) angeordnet ist und dass der zweite Schalter (S2) in Reihe mit der zweiten Primärwicklung ($L_p2$) angeordnet ist.

5. Sperrwandler nach einem der Ansprüche 1 bis 4, **dadurch gekennzeichnet, dass** eine Verbindung zwischen den beiden Primärwicklungen ($L_p1$, $L_p2$) an einen Anschluss der Speicherkondensatoreinheit ($C_{Sp}$) angeschlossen ist, deren zweiter Anschluss an ein Bezugspotenzial angeschlossen ist.

6. Sperrwandler nach Anspruch 5, **dadurch gekennzeichnet, dass** die Reihenschaltung bestehend aus zweiter Primärwicklung ($L_p2$) und zweitem Schaltelement (S2) parallel zu der Speicherkondensatoreinheit ($C_{Sp}$) angeordnet ist.

7. Sperrwandler nach einem der Ansprüche 1 bis 4, **dadurch gekennzeichnet, dass** parallel zu der Reihenschaltung bestehend aus erster Primärwicklung ($L_p1$) und Speicherkondensatoreinheit ($C_{Sp}$) eine Freilaufdiode (D2) angeordnet ist, dass die Speicherkondensatoreinheit ($C_{Sp}$) über den ersten Schalter (S1), insbesondere in Reihe mit einem ersten Strommesswiderstand ($R_S1$), mit einem Bezugspotenzial verbunden ist und dass die zweite Primärwicklung ($L_p2$) über den zweiten Schalter (S2), insbesondere in Reihe mit dem ersten und einem zweiten Strommesswiderstand ($R_S1$, $R_S2$), mit demselben Bezugspotenzial verbunden ist.

8. Sperrwandler nach einem der Ansprüche 1 bis 4, **dadurch gekennzeichnet, dass** der erste Schalter (S1) ein erstes und ein zweites Schaltelement (S1+, S1-) umfasst, dass die erste Primärwicklung ($L_p1$) in eine erste und in eine zweite Teilwicklungen ($L_p1+$, $L_p1-$) aufgeteilt ist, dass die erste Teilwicklung ($L_p1+$) in Serie mit dem ersten Schaltelement (S1+) und mit einem positiv aufgeladenen Speicherkondensator ($C_{Sp}+$) über ein erstes Gleichrichterelement (GD1) an die Wechselspannung ($U_N$) angeschlossen ist und dass die zweite Teilwicklung ($L_p1-$) in Serie mit dem zweiten Schaltelement (S1-) und einem negativ aufgeladenen Speicherkondensator ($C_{Sp}-$) über ein zweites Gleichrichterelement (GD2) an die Wechselspannung ($U_N$) angeschlossen ist.

9. Sperrwandler nach einem der Ansprüche 1 bis 8, **dadurch gekennzeichnet, dass** ein drittes Schaltelement (S3) in einem Freilaufpfad der ersten Primärwicklung ($L_p1$) angeordnet ist.

10. Sperrwandler nach einem der vorangegangenen Ansprüche, **dadurch gekennzeichnet, dass** das Verhältnis der Einschaltzeitdauern ($T_{ON}1$, $T_{ON}2$) des ersten (S1) und des zweiten Schalters (S2) in der Weise geregelt ist, dass die Spannung ($U_{Sp}$) an der Speicherkondensatoreinheit ($C_{Sp}$) im Mittel konstant bleibt.

**Claims**

1. Flyback converter with a charging phase and a blocking phase for converting an input-side alternating voltage ($U_N$) into an output-side direct voltage ($U_{sec}$), wherein the flyback converter comprises a transformer having at least two primary windings ($L_p1$, $L_p2$) arranged in series and operating in a clocked manner, **characterised in that** a power factor correction takes place **in that** in the charging phase of an operating cycle during a turn-on time ($T_{ON}1$) of a first switch (S1), a storage capacitor unit ($C_{Sp}$) for charging arranged in series with a first primary winding ($L_p1$) is connected to the alternating voltage ($U_N$) by way of rectification elements (GD1, GD2, GD3, GD4) by means of the first turned-on switch (S1) and **in that** in the charging phase of an operating cycle during a turn-on time ($T_{ON}2$) of a second switch (S2) for discharging the storage capacitor unit ($C_{Sp}$), a second primary winding ($L_p2$) is connected in parallel to the storage capacitor unit ($C_{Sp}$) by means of the second turned-on switch (S2), that during a charging phase at the start the first switch (S1) is turned on for the duration of the turn-on time ($T_{ON}1$) of the first switch (S1) and the second switch (S2) is turned off, and subsequently the second switch (S2) is turned on and the first switch (S1) is turned off and the second switch (S2) remains turned on until such time as a current ($I_p2$) through the second switching element (S2) reaches a predetermined threshold value ($I_{p\ setpoint}$), and **in that** in the blocking phase both switches (S1, S2) are turned off.

2. Flyback converter according to claim 1, **characterised in that** a filter capacitor unit ($C_F$) is arranged which is connected to a conductor of the alternating voltage ($U_N$) and downstream of which rectification elements (GD1, GD2, GD3, GD4) are arranged.

3. Flyback converter according to claim 1 or 2, **characterised in that** the transformer includes at least one secondary winding ($L_{sec}$) to which an output capacitor ($C_{sec}$) is connected by way of a secondary-side rectifier circuit ($D_{sec}$).

4. Flyback converter according to one of claims 1 to 3, **characterised in that** the first switch (S1) is arranged in series with the series circuit consisting of first primary winding ($L_p1$) and storage capacitor unit ($C_{Sp}$) and **in that** the second switch (S2) is arranged in series with the second primary winding ($L_p2$).

5. Flyback converter according to one of claims 1 to 4, **characterised in that** a connection between the two primary windings ($L_p1$, $L_p2$) is connected to a terminal of the storage capacitor unit ($C_{Sp}$), the second terminal of which is connected to a reference potential.

6. Flyback converter according to claim 5, **characterised in that** the series circuit consisting of second primary winding ($L_p2$) and second switching element (S2) is arranged in parallel with the storage capacitor unit ($C_{Sp}$).

7. Flyback converter according to one of claims 1 to 4, **characterised in that** a freewheeling diode (D2) is arranged in parallel with the series circuit consisting of first primary winding ($L_p1$) and storage capacitor unit ($C_{Sp}$), **in that** the storage capacitor unit ($C_{Sp}$) is connected to a reference potential by way of the first switch (S1), in particular in series with a first current-sensing resistor ($R_S1$), and **in that** the second primary winding ($L_p2$) is connected to the same reference potential by way of the second switch (S2), in particular in series with the first and a second current-sensing resistor ($R_S1$, $R_S2$).

8. Flyback converter according to one of claims 1 to 4, **characterised in that** the first switch (S1) comprises a first and a second switching element (S1+, S1-), **in that** the first primary winding ($L_p1$) is subdivided into a first and a second part-winding ($L_p1$+, $L_p1$-), **in that** the first part-winding ($L_p1$+) is connected to the alternating voltage ($U_N$) in series with the first switching element (S1+) and with a positively charged storage capacitor ($C_{Sp}$+) by way of a first rectifier element (GD1), and **in that** the second part-winding ($L_p1$-) is connected to the alternating voltage ($U_N$) in series with the second switching element (S1-) and a negatively charged storage capacitor ($C_{Sp}$-) by way of a second rectifier element (GD2).

9. Flyback converter according to one of claims 1 to 8, **characterised in that** a third switching element (S3) is arranged in a freewheeling path of the first primary winding ($L_p1$).

10. Flyback converter according to one of the preceding claims, **characterised in that** the ratio of the turn-on times ($T_{ON}1$, $T_{ON}2$) of the first (S1) and second switch (S2) is regulated in such a way that the voltage ($U_{Sp}$) at the storage capacitor unit ($C_{Sp}$) remains constant on average.

**Revendications**

1. Convertisseur du type flyback ayant une phase de charge et une phase de blocage pour la conversion d'une tension alternative ($U_N$) côté entrée en une tension continue ($U_{sek}$) côté sortie, lequel convertisseur comporte un transformateur muni d'au moins deux enroulements primaires ($L_{p1}$, $L_{p2}$) montés en série et fonctionne de façon cadencée, **caractérisé en ce qu'**une correction du facteur de puissance est effectuée, en connectant dans la phase de charge d'une cadence, pendant une durée d'enclenchement ($T_{ON}1$) d'un premier commutateur (S1), une unité de condensateur de puissance ($C_{Sp}$) à recharger, en série avec un premier enroulement primaire ($L_{p1}$), à la tension alternative ($U_N$) au moyen du premier commutateur (S1) via des éléments redresseurs (GD1, GD2, GD3, GD4), et en reliant dans la phase de charge d'une cadence, pendant une durée d'enclenchement ($T_{ON}2$) d'un second commutateur (S2), afin de décharger l'unité de condensateur de puissance ($C_{Sp}$), un second enroulement primaire

($L_{p2}$) en parallèle à l'unité de condensateur de puissance ($C_{Sp}$) au moyen du deuxième commutateur (S2) enclenché, en ce que pendant une phase de charge au début, pour la durée d'enclenchement ($T_{ON}1$) du premier commutateur (S1), le premier commutateur (S1) est enclenché et le second commutateur (S2) est déclenché, puis le second commutateur (S2) est enclenché et le premier commutateur (S1) est déclenché et le second commutateur (S2) reste enclenché jusqu'à ce qu'un courant ($I_p2$) traversant le second commutateur (S2) atteigne une valeur seuil prédéfinie ($I_{psoll}$), et en ce que dans la phase de blocage les deux commutateurs (S1, S2) sont déclenchés.

2. Convertisseur du type flyback selon la revendication 1, **caractérisé en ce qu'**une unité de condensateur de filtrage ($C_F$) est prévue, laquelle est connectée à un conducteur de la tension alternative ($U_N$) et en aval de laquelle des éléments redresseurs (GD1, GD2, GD3, GD4) sont montés.

3. Convertisseur du type flyback selon la revendication 1 ou 2, **caractérisé en ce que** le transformateur comprend au moins un enroulement secondaire ($L_{sek}$) auquel un condensateur de sortie ($C_{sek}$) est connecté via un circuit redresseur ($D_{sek}$) côté secondaire.

4. Convertisseur du type flyback selon l'une des revendications 1 à 3, **caractérisé en ce que** le premier commutateur (S1) est monté en série avec le montage en série composé du premier enroulement primaire ($L_p1$) et de l'unité de condensateur de puissance ($C_{Sp}$) et **en ce que** le second commutateur (S2) est monté en série avec le second enroulement primaire ($L_p2$).

5. Convertisseur du type flyback selon l'une des revendications 1 à 4, **caractérisé en ce qu'**une liaison entre les deux enroulements primaires ($L_p1$, $L_p2$) est connectée à une borne de l'unité de condensateur de puissance ($C_{Sp}$) dont la seconde borne est connectée à un potentiel de référence.

6. Convertisseur du type flyback selon la revendication 5, **caractérisé en ce que** le montage en série composé du second enroulement primaire ($L_p2$) et du second commutateur (S2) est monté en parallèle à l'unité de condensateur de puissance ($C_{Sp}$).

7. Convertisseur du type flyback selon l'une des revendications 1 à 4, **caractérisé en ce qu'**une diode de roue libre (D2) est montée en parallèle au montage en série composé du premier enroulement primaire ($L_p1$) et de l'unité de condensateur de puissance ($C_{Sp}$), en ce que l'unité de condensateur de puissance ($C_{Sp}$) est reliée via le premier commutateur (S1), en particulier en série avec une première résistance de mesure de courant ($R_s1$), à un potentiel de référence et en ce que le second enroulement primaire ($L_p2$) est relié via le second commutateur (S2), en particulier en série avec la première et une seconde résistance de mesure de courant ($R_s1$, $R_s2$), au même potentiel de référence.

8. Convertisseur du type flyback selon l'une des revendications 1 à 4, **caractérisé en ce que** le premier commutateur (S1) comprend un premier et un second élément de commutation (S1+, S1-), **en ce que** le premier enroulement primaire ($L_p1$) est divisé en un premier et un second enroulement partiel ($L_p1+$, $L_p1-$), **en ce que** le premier enroulement partiel ($L_p1+$) est connecté en série avec le premier élément de commutation (S1+) et avec un condensateur de puissance chargé positivement ($C_{sp}+$) à la tension alternative ($U_N$) via un premier élément redresseur (GD1) et **en ce que** le second enroulement partiel ($L_p1-$) est connecté en série avec le second élément de commutation (S1-) et un condensateur de puissance chargé négativement ($C_{sp}-$) à la tension alternative ($U_N$) via un second élément redresseur (GD2).

9. Convertisseur du type flyback selon l'une des revendications 1 à 8, **caractérisé en ce qu'**un troisième élément de commutation (S3) est monté dans une voie de roue libre du premier enroulement primaire ($L_p1$).

10. Convertisseur du type flyback selon l'une des revendications précédentes, **caractérisé en ce que** le rapport des durées d'enclenchement ($T_{ON}1$, $T_{ON}2$) du premier (S1) et du second commutateur (S2) est réglé de telle sorte que la tension ($U_{Sp}$) appliquée à l'unité de condensateur de puissance ($C_{Sp}$) reste en moyenne constante.

**FIG 1**     Stand der Technik

**FIG 2A**     Stand der Technik

**FIG 2B**     Stand der Technik

# FIG 3

# FIG 4

# FIG 5

FIG 6

FIG 7

## FIG 8

## FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5224025 A
- JP 2002315327 A
- US 4280174 A
- JP 4244781 A
- JP 4265666 A